# EUROPEAN PATENT APPLICATION

(11) **EP 3 062 220 A1**
(43) Date of publication of application: **31.08.2016**
(21) Application number: 15275047.7
(22) Date of filing: 25.02.2015
(51) Int. Cl.: G06F 9/44, G06F 3/14, G06T 19/00

(54) **Information system and method**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A mixed reality monitoring system for use within a building or other structure, the system comprising a headset (100) for placing over a user's eyes, in use, said headset including a screen, image capture means for capturing images of the real world in the vicinity of the user, and a processor (104) configured to generate a three-dimensional virtual reality environment and blend images of said real world environment into said three-dimensional virtual reality environment to create a mixed reality environment representative of a user's field of view and display said mixed reality environment on said screen, said system further comprising a storage module (112) having stored therein a three-dimensional virtual model of the layout and at least one required condition of said building or structure, a comparison module (104) for comparing said images of the real world in the vicinity of the user with a corresponding portion of said virtual model to identify differences in said layout and/or at least one condition, and an image processing module (104) configured to generate image data representative of any identified differences and display said image data within said mixed reality environment on said screen. Data from external sensors (108, 110) may also be received by the comparison module (104) and compared against corresponding data within the virtual model (112) to identify any differences.

## Description

This invention relates generally to an information system and method and, more particularly but not necessarily exclusively, to a visual information and maintenance system and method for use in passive housekeeping and/or maintenance of a building or other structure.

There are many environments in which it is essential, from a health and safety perspective at least, to ensure that access to areas and emergency equipment is maintained at all times, walkways and/or designated escape routes remain clear of obstruction, and certain items and equipment (particularly emergency equipment) are located in the correct positions and where they are expected to be.

Furthermore, servicing, for the purposes of housekeeping and maintenance of some buildings and structures can be time-consuming, costly and may require down-time. Structural analysis of high load environments, such as submarines and the like, is a very specialised activity, which particularly time consuming and often complex. Therefore, servicing is performed at distinct intervals, whereas critical damage could occur between services which may then go undetected, either until an associated emergency occurs, or until the next service time. On the other hand, there are at least some potential maintenance issues, problems and incidents that are preceded by early warning signs, such as excess heat in unexpected areas of the building and structure, which could, if detected early, serve as a warning of the existence of a maintenance issue or emergency situation that can then be dealt with before it escalates.

It would therefore be desirable to provide a passive information system that provides continuous monitoring and/or analysis of a building or other structure, in relation to key parameters and characteristics thereof, in order to provide an early visual indication of issues that may need to be addressed, and it is an object of aspects of the present invention to address at least some of the above-mentioned issues.

In accordance with an aspect of the present invention, there is provided a mixed reality monitoring system for use within a building or other structure, the system comprising a headset for placing over a user's eyes, in use, said headset including a screen, image capture means for capturing images of the real world in the vicinity of the user, and a processor configured to generate a three-dimensional virtual reality environment and blend images of said real world environment into said three-dimensional virtual reality environment to create a mixed reality environment representative of a user's field of view and display said mixed reality environment on said screen, said system further comprising a storage module having stored therein a three-dimensional virtual model of the layout and at least one required condition of said building or structure, a comparison module for comparing said images of the real world in the vicinity of the user with a corresponding portion of said virtual model to identify differences in said layout and/or at least one condition, and an image processing module configured to generate image data representative of any identified differences and display said image data within said mixed reality environment on said screen.

In one exemplary embodiment of the invention, the image data may comprise a coloured mask and the image processing module is configured to overlay said mask onto a corresponding area of said mixed reality environment displayed on said screen to indicate therein the location of an identified difference. The image data may, additionally or alternatively, include verbal data indicative of an identified difference and/or recommended user action. However, it will be appreciated that the image data generated to represent the identified difference can take any one of a number of different forms, dependent on the design of the system and/or the nature of the identified difference, and the present invention is not necessarily intended to be in any way limited in this regard.

The comparison module may be configured to receive data from at least one external sensor indicative of a condition of said building or other structure at the location of said sensor, compare said data with corresponding data stored in said virtual model to identify any differences in said condition and outputting data representative of an identified difference, said image processing module being configured to receive said signal and generate image data representative of said identified difference and display said image data within said mixed reality environment on said screen.

A system according to an exemplary embodiment of the present invention may further comprise a positioning module for determining a current location, within said building or structure, of said user. The positioning module may be mounted in or on said headset.

The comparison module may be configured to receive, from remote sensors, data representative of the health or structural or environmental status of the building or other structure and/or equipment located therein, compare said data with corresponding data stored in said virtual model to identify any differences in said status and outputting data representative of an identified difference, said image processing module being configured to receive said signal and generate image data representative of said identified difference and display said image data within said mixed reality environment on said screen.

It will be appreciated that, in some exemplary embodiments of the invention, the headset may include at least one external sensor mounted therein or thereon.

Another aspect of the present invention extends to control apparatus for a mixed reality information system according to any of the preceding claims, said control apparatus comprising a storage module having stored therein a three-dimensional virtual model of a building or other structure together with data representative of ambient conditions and status of said building or other structure at respective locations therein, a comparison module configured to receive image data representative of the real world in the vicinity of the user with a corresponding portion of said virtual model to identify differences in said layout and/or at least one condition or status, and an image processing module configured to generate image data representative of any identified differences for display on a user's screen.

The apparatus described above may be configured to update said stored three-dimensional virtual model using image data representative of a user's real world environment.

Another aspect of the present invention extends further to a mixed reality environment monitoring system for use within a building or other structure, for monitoring the condition and structural status of said building or other structure, the system comprising at least one headset for placing over a user's eyes, in use, image capture means for capturing images of the real world environment in the vicinity of the user, and a processor configured to generate a three-dimensional virtual reality environment and blend images of said real world environment into said three-dimensional virtual reality environment to create a mixed reality environment representative of a respective user's field of view and display said mixed reality environment on said screen, the system further comprising control apparatus as described above.

Yet another aspect of the present invention extends still further to a method of providing an environment monitoring system for a building or other structure, the method comprising providing a mixed reality system comprising a headset for placing over a user's eyes, in use, said headset including a screen, image capture means for capturing images of the real world environment in the vicinity of the user, and a processor configured to generate a three-dimensional virtual reality environment and blend images of said real world environment into said three-dimensional virtual reality environment to create a mixed reality environment representative of a user's field of view and display said mixed reality environment on said screen, the method further comprising providing a storage module and storing therein a three-dimensional virtual model of a building or other structure together with data representative of ambient conditions and status of said building or other structure at respective locations therein, providing a comparison module configured to receive image data representative of the real world in the vicinity of the user with a corresponding portion of said virtual model to identify differences in said layout and/or at least one condition or status, and configuring an image processing module to generate image data representative of any identified differences for display on a user's screen.

These and other aspects of the present invention will be apparent from the following specific description in which embodiments of the present invention are described, by way of examples only, and with reference to the accompanying drawings, in which:
Figure 1 is a front perspective view of a headset for use in a mixed reality system in respect of which a method and apparatus according to an exemplary embodiment of the present invention can be provided;
Figure 2 is a schematic block diagram illustrating the configuration of some principal elements of a mixed reality system for use in an exemplary embodiment of the present invention; and
Figure 3 is a schematic illustration of a single image frame displayed on the screen of a mixed reality system according to an exemplary embodiment of the present invention.

Virtual reality systems are known, comprising a headset which, when placed over a user's eyes, creates and displays a three dimensional virtual environment in which a user feels immersed and with which the user can interact in a manner dependent on the application. For example, the virtual environment may comprise a game zone, within which the user can play a game.

More recently, augmented and mixed reality systems have been developed, wherein image data captured in respect of a user's real world environment can be captured, rendered and placed within a 3D virtual reality environment. Thus, the user views their real world environment as a three dimensional virtual world generated images captured from their surroundings.

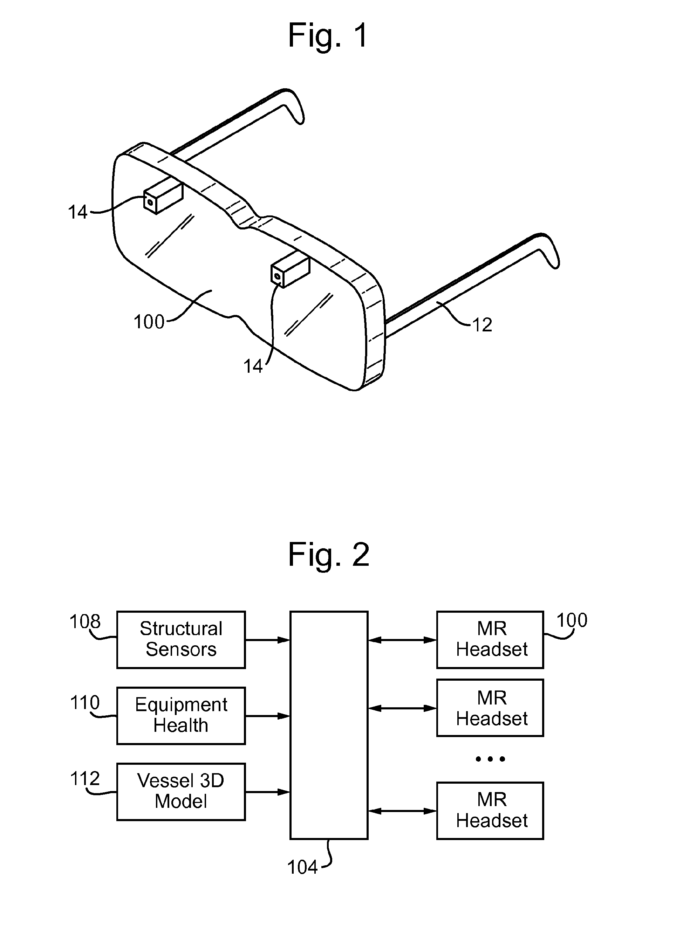

Referring to Figure 1 of the drawings, a mixed reality display system may include a headset 100 comprising a visor 10 having a pair of arms 12 hingedly attached at opposing sides thereof in order to allow the visor to be secured onto a user's head, over their eyes, in use, by placing the curved ends of the arms 12 over and behind the user's ears, in a manner similar to conventional spectacles. It will be appreciated that, whilst the headset is illustrated herein in the form of a visor, it may alternatively comprise a helmet for placing over a user's head, or even a pair of contact lenses or the like, and the present invention is not intended to be in any way limited in this regard. Also provided on the headset, is a pair of image capture devices 14 for capturing images of the environment, such image capture devices being mounted as closely as possible aligned with the user's eyes, in use.

A typical mixed reality system further comprises a processor, which is communicably connected in some way to a screen which is provided inside the visor 10. Such communicable connection may be a hard wired electrical connection, in which case the processor and associated circuitry will be mounted on the headset. Alternatively, however, the processor may be configured to wirelessly communicate with the visor, for example, by means of Bluetooth or similar wireless communication protocol, in which case, the processor need not be mounted on the headset but can instead be located remotely from the headset, with the relative allowable distance between them being dictated, and limited only by, the wireless communication protocol being employed. For example, the processor could be mounted on, or formed integrally with, the user's clothing, or instead located remotely from the user, either as a stand-alone unit or as an integral part of a larger control unit, for example.

In general, the processor receives image data from the image capture devices, and renders and blends such image data, in real time, into a displayed three dimensional virtual environment. The concept of real time image blending for augmented or mixed reality is known, and several different techniques have been proposed. The present invention is not necessarily intended to be limited in this regard. However, for completeness, one exemplary method for image blending will be briefly described. Thus, in respect of an object or portion of a real world image to be blended into the virtual environment, a threshold function may be applied in order to extract that object from the background image. Its relative location and orientation may also be extracted and preserved by means of marker data. Next, the image and marker data is converted to a binary image, possibly by means of adaptive thresholding (although other methods are known). The marker data and binary image are then transformed into a set of coordinates that match the location within the virtual environment in which they will be blended. Such blending is usually performed using black and white image data. Thus, if necessary, colour data sampled from the source image can be backward warped, using homography, to each pixel in the resultant virtual scene. All of these computational steps require minimal processing and time and can, therefore, be performed quickly and in real (or near real) time. Thus, as the user's field of view and/or external surroundings change, image data within the mixed reality environment can be updated in real time.

Referring to Figure 2 of the drawings, an emergency guidance system according to a first exemplary embodiment of the present invention comprises at least one mixed reality headset 100 and an information processing system 104, which may be integrated in or mounted on the headset 100 and/or provided at a fixed location within the building or structure and configured for wireless communication with the headset 100. It is envisaged that some exemplary embodiments may comprise a central information processing system for communication with a single headset, or in parallel with a plurality of headsets. However, in alternative exemplary embodiments, the processing functionality of the information processing system may be distributed, partly or fully, amongst individual processing units provided on or on the headsets, which may or may not be the same processing units used to provide on the screen mixed reality images of the wearer's environment derived from image data captured by the image capture devices on the headset, and the present invention is not necessarily intended to be in any way limited in this regard.

The processing system 104 is configured to receive, from one or more external sources 108, 110, data representative of, for example, the structural status of the building or structure, and the health and/or status or condition of (at least) key equipment therein. Thus, the processing system 104 generally includes an interface to enable data to be transmitted therefrom and received thereby, in order that data that could potentially be changing dynamically is updated in real (or near real) time. Furthermore, the processing system 104 may be configured to receive, or have stored therein, a three dimensional, virtual model 112 of the building or structure. This virtual model 112 includes, not only the internal structural layout of the building (or other structure, such as ship or submarine), but also essential equipment, such as fire extinguishers and other emergency equipment, and their expected locations within the building or structure, together with data representative of walkways and escape routes that are required to be kept clear of obstructions at all times. Other data held within the model 112 may include, for example, fire doors that must be kept closed, and the like, and also correct temperatures, air quality and similar environmental characteristics of the various sectors of the building or structure. In other words, the virtual model 112 is intended to represent precisely the correct layout and overall condition of the building or other structure.

It will be appreciated by a person skilled in the art that the processing functionality of the above-described emergency information processing system may be provided by means of more than one processor. Indeed, several processors may be required to facilitate embodiments of the present invention, some of which may be dedicated system processors, whether remote or on-board (i.e. mounted in or on the one or more headsets 100), and others of which may be processors or other data processing devices incorporated in the network infrastructure of the building or other structure, and the present invention is not necessarily intended to be limited in this regard.

The or each headset 100 may include an internal geo-location system for generating data representative of the relative location, within the building or structure, of the wearer of the respective headset and transmit such data, continuously or otherwise, to the processing system 104. In use, the or each user places a respective headset 100 over their eyes, and performs their normal duties around the building or structure, viewing their environment through the mixed reality environment displayed on the screen.

As the user moves around the building or structure, the image capture devices on their headset 100 captures images of their real world environment, which are not only used to generate the mixed reality display on the user's screen, but also transmitted to the information processor 104. The information processor 104 is configured to compare the real world images against the corresponding portions of the virtual model 112 in order to identify anomalies. It will be appreciated that image recognition and matching techniques may be used to identify the area of the building or structure (and, therefore, the correct portion of the virtual model 112) corresponding to the location and viewpoint of the user. However, geo-location sensors on the user's headset may additionally or alternatively be used to facilitate the identification of the current location of the user such that a meaningful comparison between the real world images and the virtual model 112 can be made.

In the event that, for example, a fire extinguisher is determined to be missing or located in the wrong place, or an obstruction is identified in a designated escape route, image data representative of the anomaly is generated by the processor 104 and inserted into the mixed reality environment displayed on the respective user's screen. Such image data may take any convenient form, provided that it is immediately visually informative to the user. Thus, for example, in the event that an obstruction is identified, this could be overlaid with a coloured (e.g. red) mask indicating to the user that the obstruction should be removed, or other action is required to be taken. If a fire extinguisher is determined to be missing from its required location, a similar visual indication could be inserted into the user's display to alert them that action is required. Of course, written information, giving further user guidance, could additionally or alternatively be inserted into the mixed reality display seen by the user.

Furthermore, real world image data could additionally (or alternatively) be received from static cameras mounted in and around the building or structure (e.g. CCTV cameras and the like), and image data from such external sources can be fed to the information processor 104 for comparison against the virtual model 112 in a similar manner, such that any anomalies detected therein can be visually represented and displayed on one or more users' screens, within their mixed reality display, thereby enabling potentially hazardous situations to be remotely identified and reported to appropriate occupants of the building or structure.

As stated above, the processing system 104 is further configured to receive data from external sources 108, 110, such as heat sensors and structural sensors located at known points around the building or structure, and such data can be compared against respective 'normal' data for those locations stored within the virtual model 112. Thus, for example, sources of heat may be mapped to appropriate areas of the virtual model during normal conditions. Once again, if any anomalies (i.e. changes from the stored model) are detected, these can be classified and representative image data thereof can be generated by the processing system 104 for insertion into one or more users' mixed reality displays, thereby enabling potentially hazardous structural or equipment malfunctions to be identified early and, therefore, addressed. Alternatively, the headsets could be provided with spectral cameras that collect multi-spectral data from the real world environment in the vicinity of the user, and such data could then be employed to identify sources of heat within the user's field of view, compared against the stored model, and any variations from the model reported visually on the user's screen.

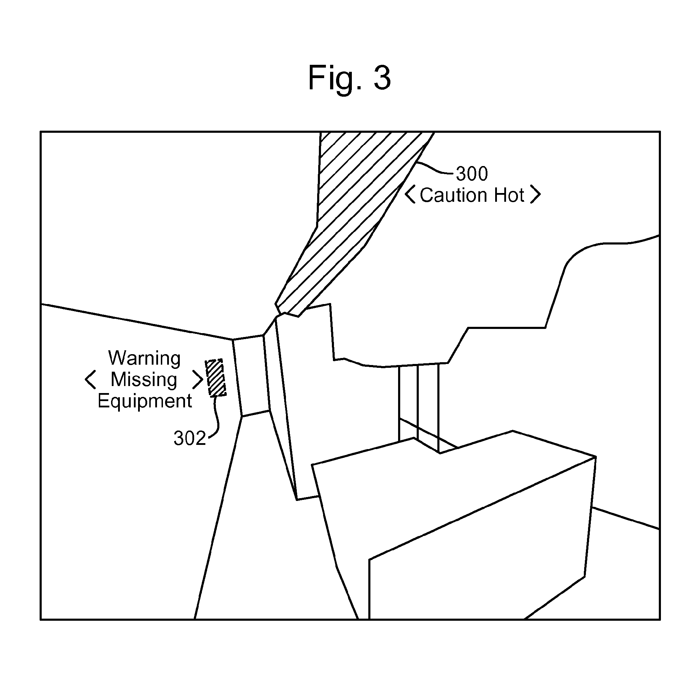

Still further, the processing system 104 may be configured to compare the real world images captured by the image captures devices on a user's headset, compare such images against the stored virtual model of the internal structure of the building, and identify areas of, for example, deformation (perhaps due to excess stress), which can then be visually reported on the user's screen as a potential fault or hazard and/or to maintenance teams for action. In all cases, the visual representation of a potential hazard/maintenance issue may be inserted into a user's mixed reality environment displayed on the screen, at a location within the image indicative of the location of the potential hazard or maintenance issue. Thus, referring to Figure 3 of the drawings, a schematic still frame of an image that might be presented to a user, in an exemplary embodiment of the present invention, indicates that the duct 300 running along the ceiling of the structure is hot (and may also be coloured in red, for example), and that a fire extinguisher 302 is missing from the walkway.

In exemplary embodiments of the invention, the virtual model 112 could be constructed over time, using real world images from users' headsets, and updated thereby as required, such that an initial completely accurate model is not initially required to be constructed.

It will be appreciated by a person skilled in the art, from the foregoing description, that modifications and variations can be made to the described embodiments, without departing from the scope of the present invention as claimed. It will be further appreciated that the above-described functionality may be performed without the express knowledge of the user, but simply as they walk around the building or other structure performing their normal tasks. Thus, housekeeping and structural analysis can be provided, in accordance with some exemplary embodiments of the present invention, as an automatic by-product of using a mixed reality system in the workplace, rather than as a dedicated activity or function.

## Claims

1. A mixed reality monitoring system for use within a building or other structure, the system comprising a headset for placing over a user's eyes, in use, said headset including a screen, image capture means for capturing images of the real world in the vicinity of the user, and a processor configured to generate a three-dimensional virtual reality environment and blend images of said real world environment into said three-dimensional virtual reality environment to create a mixed reality environment representative of a user's field of view and display said mixed reality environment on said screen, said system further comprising a storage module having stored therein a three-dimensional virtual model of the layout and at least one required condition of said building or structure, a comparison module for comparing said images of the real world in the vicinity of the user with a corresponding portion of said virtual model to identify differences in said layout and/or at least one condition, and an image processing module configured to generate image data representative of any identified differences and display said image data within said mixed reality environment on said screen.

2. A system according to claim 1, wherein said image data a coloured mask and the image processing module is configured to overlay said mask onto a corresponding area of said mixed reality environment displayed on said screen to indicate therein the location of an identified difference.

3. A system according to claim 1 or claim 2, wherein said image data includes verbal data indicative of an identified difference and/or recommended user action.

4. A system according to any of the preceding claims, wherein said comparison module is configured to receive data from at least one external sensor indicative of a condition of said building or other structure at the location of said sensor, compare said data with corresponding data stored in said virtual model to identify any differences in said condition and outputting data representative of an identified difference, said image processing module being configured to receive said signal and generate image data representative of said identified difference and display said image data within said mixed reality environment on said screen.

5. A system according to any of the preceding claims, further comprising a positioning module for determining a current location, within said building or structure, of said user.

6. A system according to claim 5, wherein said positioning module is mounted in or on said headset.

7. A system according to any of the preceding claims, wherein said comparison module is configured to receive, from remote sensors, data representative of the health or structural or environmental status of the building or other structure and/or equipment located therein, compare said data with corresponding data stored in said virtual model to identify any differences in said status and outputting data representative of an identified difference, said image processing module being configured to receive said signal and generate image data representative of said identified difference and display said image data within said mixed reality environment on said screen.

8. A system according to claim 4 or claim 7, wherein said headset includes at least one external sensor mounted therein or thereon.

9. Control apparatus for a mixed reality information system according to any of the preceding claims, said control apparatus comprising a storage module having stored therein a three-dimensional virtual model of a building or other structure together with data representative of ambient conditions and status of said building or other structure at respective locations therein, a comparison module configured to receive image data representative of the real world in the vicinity of the user with a corresponding portion of said virtual model to identify differences in said layout and/or at least one condition or status, and an image processing module configured to generate image data representative of any identified differences for display on a user's screen.

10. Apparatus according to claim 9, configured to update said stored three-dimensional virtual model using image data representative of a user's real world environment.

11. A mixed reality environment monitoring system for use within a building or other structure, for monitoring the condition and structural status of said building or other structure, the system comprising at least one headset for placing over a user's eyes, in use, image capture means for capturing images of the real world environment in the vicinity of the user, and a processor configured to generate a three-dimensional virtual reality environment and blend images of said real world environment into said three-dimensional virtual reality environment to create a mixed reality environment representative of a respective user's field of view and display said mixed reality environment on said screen, the system further comprising control apparatus according to claim 9 or claim 10.

12. A method of providing an environment monitoring system for a building or other structure, the method comprising providing a mixed reality system comprising a headset for placing over a user's eyes, in use, said headset including a screen, image capture means for capturing images of the real world environment in the vicinity of the user, and a processor configured to generate a three-dimensional virtual reality environment and blend images of said real world environment into said three-dimensional virtual reality environment to create a mixed reality environment representative of a user's field of view and display said mixed reality environment on said screen, the method further comprising providing a storage module and storing therein a three-dimensional virtual model of a building or other structure together with data representative of ambient conditions and status of said building or other structure at respective locations therein, providing a comparison module configured to receive image data representative of the real world in the vicinity of the user with a corresponding portion of said virtual model to identify differences in said layout and/or at least one condition or status, and configuring an image processing module to generate image data representative of any identified differences for display on a user's screen.
